# EUROPEAN PATENT APPLICATION

(11) **EP 1 538 802 A2**
(43) Date of publication of application: **08.06.2005**
(21) Application number: 04028764.1
(22) Date of filing: 03.12.2004
(51) Int. Cl.: H04L 27/26

(54) **Apparatus and method for controlling adaptive modulation and coding in an orthogonal frequency division multiplexing communication system**

(30) Priority: 03.12.2003 KR 2003087158
(71) Applicant: Samsung Electronics Co., Ltd., Suwon-si, Gyeonggi-do (KR)
(72) Inventor: Kim, Yung-Soo, Yeongtong-gu Suwon-si Gyeonggi-do (KR); Lee, Ye-Hoon, Yeongtong-gu Suwon-si Gyeonggi-do (KR)
(74) Representative: Grünecker, Kinkeldey, Stockmair & Schwanhäusser Anwaltssozietät

(57) **Abstract**

In an OFDMA mobile communication system in which a total frequency band is divided into a plurality of sub-carrier bands, for signal transmission, to assign sub-carriers to MSs, a BS divides the total frequency band into L sub-frequency bands. The BS detects the channel condition of each of the MSs and determines a sub-frequency band for each MS according to the channel condition among the L sub-frequency bands. The BS assigns sub-carriers in the determined sub-frequency band at a predetermined sub-carrier spacing to each MS.

## Description

The present invention relates generally to an OFDM (Orthogonal Frequency Division Multiplexing) communication system, and in particular, to an apparatus and method for assigning sub-carriers adaptively according to channel condition.

With the introduction of a cellular mobile communication system in the U.S. in the late 1970's, Korea started to provide a voice communication service in a first generation (1G) analog mobile communication system, AMPS (Advanced Mobile Phone Service). In the mid 1990's, Korea deployed a second generation (2G) mobile communication system, CDMA (Code Division Multiple Access) to provide voice and low-speed data services.

In the late 1990's, Korea partially deployed a third generation (3G) mobile communication system, IMT-2000 (International Mobile Telecommunication-2000), aiming at advanced wireless multimedia services, worldwide roaming, and high-speed data services. The 3G mobile communication system was especially developed to transmit data at a high rate along with the rapid increase of the amount of serviced data.

The 3G mobile communication system is evolving into a fourth generation (4G) mobile communication system. The 4G mobile communication system is under standardization for the purpose of providing efficient interworking and integrated service between a wired communication network and a wireless communication network beyond simple wireless communication services which the previous-generation mobile communication systems provide. It follows that a technology for transmitting a large volume of data at or near a capacity level available in the wired communication network must be developed for the wireless communication network.

In this context, studies are being actively conducted on OFDM as a useful scheme for high-speed data transmission on wired/wireless channels in the 4G mobile communication system. OFDM is a special case of MCM (Multi Carrier Modulation) in which a serial symbol sequence is converted to parallel symbol sequences and modulated to a plurality of mutually orthogonal sub-carriers (or sub-carrier channels).

OFDMA (Orthogonal Frequency Division Multiple Access) is based on OFDM. In OFDMA, a plurality of users share the sub-carriers of one OFDM symbol. An OFDMA communication system is based on IEEE (Institute of Electrical and Electronics Engineers) 802.16a to IEEE 802.16e. The IEEE 802.16a communication system is a fixed BWA (Broadband Wireless Access) communication system using OFDMA. The IEEE 802.16e communication system supports the mobility of a mobile station (MS). Both communication systems adopt a 2048-point IFFT (Inverse Fast Fourier Transform) and use 1702 sub-carriers. Among them, 166 sub-carriers are pilot sub-carriers and the other 1536 sub-carriers are data sub-carriers. The 1526 sub-carriers are grouped into a total of 32 sub-channels, and thus 48 sub-carriers form one sub-channel. The sub-channels are assigned to a plurality of users according to system conditions. A sub-channel refers to a channel comprising a plurality of sub-carriers. The OFDMA communication system aims to achieve frequency diversity gain by distributing over a whole frequency band the entire sub-carriers available to the system, particularly data sub-carriers.

In the OFDMA communication system, the frequency spectrum of an OFDMA signal transmitted from a transmitter, for example in a base station (BS), has transmit power for each sub-carrier signal over the whole frequency band. Since all of the sub-carrier signals in the entire frequency band are transmitted with the same transmit power, they should have the same receive power since they have under the same frequency response characteristic in the frequency band. On actual radio channels, they don't. To compare the frequency response characteristics of radio channels over which all the sub-carrier signals are transmitted, to two different MSs, first and second MSs, at the same transmit power will be analyzed, albeit more users share the sub-carriers in the OFDMA communication system.

The first MS receives all of the sub-carrier signals from the BS. The frequency spectrum of the received sub-carrier signals is different from that of the transmitted sub-carrier signals from the BS. Among the received sub-carrier signals, some have frequency responses at or above a threshold, which implies that they can be modulated, and others have frequency responses below the threshold. For example, the first MS has four sub-carrier signals having frequency responses below the threshold among all of the received sub-carrier signals. Due to frequency selective fading, the first MS cannot receive data normally on the four sub-carriers.

Meanwhile, the second MS also receives all of the sub-carrier signals from the BS. The frequency spectrum of the received sub-carrier signals is different from that of the transmitted sub-carrier signals from the BS. Among the received sub-carrier signals, some have frequency responses at or above a threshold, which implies that they can be modulated, and others have frequency responses below the threshold. For example, the second MS has five sub-carrier signals having frequency responses below the threshold among all of the received sub-carrier signals. Due to frequency selective fading, the second MS cannot receive data normally on the five sub-carriers.

Thus, some sub-carriers can be used by an MS, while others can not. Channel characteristics in the OFDMA communication system are determined significantly by the following parameters.
(1) Mobile Velocity: Mobile velocity is closely related to a Doppler spread. The Doppler spread increases as the MS moves faster, and vice versa.
(2) Delay Spread: Delay spread is closely related to the channel environment. Typically, an outdoor channel environment experiences a longer delay spread than an indoor channel environment.
(3) Uplink Timing Error: The OFDMA mobile communication system is designed to take into consideration the mobile velocity, delay spread, and uplink timing error. If the OFDMA system is designed for the worst channel condition, resources are considerably wasted. On the other hand, if the OFDMA system design is implemented for the best channel condition, system reliability is decreased.

Dynamic assignment of resources (i.e. sub-carriers) to individual MSs acts as a very significant parameter in terms of performance in the OFDMA mobile communication system. In this context, studies have been actively conducted on sub-carrier assignment for the OFDMA communication system.

One of sub-carrier assignment methods proposed is disclosed in U.S. Patent Application No. 2002/0119781 A1, entitled "OFDMA with Adaptive Subcarrier-Cluster Configuration and Selective Loading", to Xiaodong Li, Hui Liu, Kemin Li, and Wenzhong Zhang. According to this method, a modulation scheme and a coding rate are selected according to the SINR (Signal to Interference and Noise Ratio) of each sub-carrier or each sub-carrier cluster. A sub-carrier cluster is a kind of channel including a plurality of sub-carriers. The number of sub-carriers in the cluster is fixed or variable. Also, the sub-carriers in the cluster may be successive or insuccessive. The SINR of the cluster is the average or the lowest of the SINRs of the sub-carriers. A BS determines a modulation scheme and a coding rate for a downlink cluster according to feedback information received from each MS. It channel-estimates an uplink access channel signal received from each MS and determines a modulation scheme and a coding rate for an uplink cluster according to the channel estimation result.

While the above-described method improves resource efficiency and system throughput, it neglects the mobility of the MS and increases complexity due to the calculation of the SINR of each sub-carrier for assignment of resources.

Another sub-carrier assignment method is proposed by U.S. Patent No. 6175550 B1, entitled "OFDM System with Dynamically Scalable Operating Parameters and Method Thereof", to Richard D. J. van Nee. The entire system bandwidth of an OFDM communication system, the number of sub-carriers, the number of bits per sub-carrier, and the number of bits per symbol per sub-carrier are dynamically scaled. That is, a modulation scheme and a coding method are dynamically scaled. The dynamic scaling increases the delay spread tolerance and the SINR in various channel environments and enables a variety of services. As a result, the OFDM system is more flexible and more adaptive. However, this method gives no regard to the multiple accesses and its real implementation is difficult in the OFDM communication system, thereby increasing cost. For example, symbol duration must be increased to increase the delay spread tolerance, which leads to the decrease of the transmission rate over the entire frequency band.

A third sub-carrier assignment method, as disclosed in U.S. Patent No. 6563786 B1, entitled "OFDM System with Selectable Rate", to Richard Van Nee, defines two operation modes according to the delay spread in an OFDM communication system: normal mode and fallback mode. The normal mode operates for a typical delay spread, while the fallback mode operates for a relatively long delay spread. In the fallback mode, a guard interval is lengthened as the delay spread is increased, to thereby provide a better delay spread tolerance.

As stated earlier, resource assignment is very significant to the actual system performance in an OFDMA communication system. Since resource assignment methods proposed so far have their own shortcomings as described above, there is a need for a new method of adaptively assigning resources according to a channel condition.

An aspect of the present invention is to substantially solve at least the above problems and/or disadvantages and to provide at least the advantages below. Accordingly, the object of the present invention is to provide a sub-carrier assigning method in an OFDMA mobile communication system.

This object is solved by the subject matter of the independent claims.

Preferred embodiments are defined in the dependent claims.

Another aspect of the present invention is to provide a method of adaptively assigning sub-carriers according to channel characteristics in an OFDMA mobile communication system.

A further aspect of the present invention is to provide a method of dynamically assigning sub-carriers in frequency and time domains in an OFDMA mobile communication system.

The above object and aspects are achieved by providing an adaptive sub-carrier assigning method according to channel condition in an OFDMA mobile communication system.

According to one aspect of the present invention, in an OFDMA mobile communication system in which a total frequency band is divided into a plurality of sub-carrier bands, for signal transmission, to assign sub-carriers to MSs, a BS divides the total frequency band into L sub-frequency bands. The BS detects the channel condition of each of the MSs and determines a sub-frequency band for each MS according to the channel condition among the L sub-frequency bands. The BS assigns sub-carriers in the determined sub-frequency band at a predetermined sub-carrier spacing to each MS.

According to another aspect of the present invention, in an OFDMA mobile communication system in which a total frequency band is divided into a plurality of sub-carrier bands, for signal transmission, to assign sub-carriers to MSs, a BS divides a predetermined time domain into L time areas. The BS detects the channel condition of each of the MSs and determines a time area for each MS according to the channel condition among the L time areas. The BS assigns sub-carriers in the determined time area at a predetermined spacing to each MS.

The above features and advantages of the present invention will become more apparent from the following detailed description when taken in conjunction with the accompanying drawings in which:
FIG. 1 is a block diagram of a transmitter in an OFDMA communication system to which the present invention is applied;
FIG. 2 is a diagram illustrating sub-carrier assignment according to an embodiment of the present invention;
FIG. 3 is a diagram illustrating sub-carrier assignment according to another embodiment of the present invention;
FIG. 4 is a diagram illustrating sub-carrier assignment according to a third embodiment of the present invention;
FIG. 5 is a diagram illustrating sub-carrier assignment according to a fourth embodiment of the present invention;
FIG. 6 is a diagram illustrating sub-carrier assignment according to a fifth embodiment of the present invention;
FIG. 7 is a diagram illustrating sub-carrier assignment according to a sixth embodiment of the present invention;
FIGs. 8A to 8D illustrate magnitude curves according to the embodiments of the present invention; and
FIGs. 9A and 9B illustrate BER (Bit Error Rate) curves according to the embodiments of the present invention.

Preferred embodiments of the present invention will be described herein below with reference to the accompanying drawings. In the following description, well-known functions or constructions are not described in detail since they would obscure the invention in unnecessary detail.

The present invention provides a method of adaptively assigning sub-carriers according to channel conditions in an OFDMA mobile communication system. Particularly, the present invention provides a method of adaptively assigning sub-carriers according to channel conditions, which involves the velocity of an MS, delay spread, and timing error.

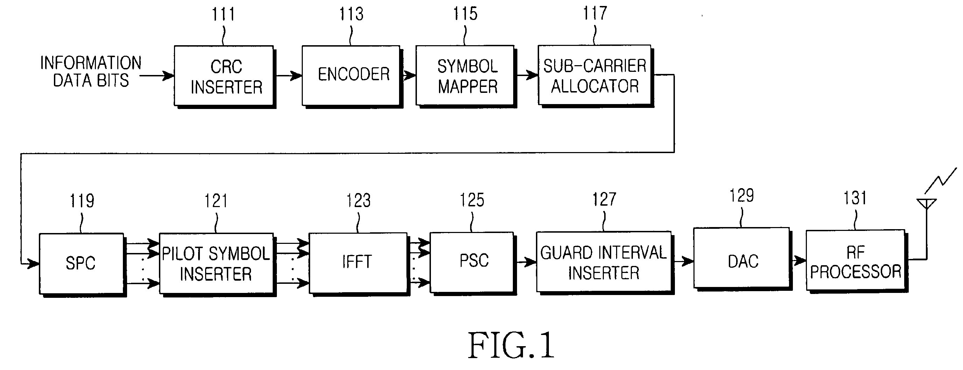

FIG. 1 is a block diagram of a transmitter in an OFDMA communication system to which the present invention is applied.

Referring to FIG. 1, the transmitter comprises a CRC (Cyclic Redundancy Check) inserter 111, an encoder 113, a symbol mapper 115, a sub-carrier allocator 117, a serial-to-parallel converter (SPC) 119, a pilot symbol inserter 121, an IFFT (Inverse Fast Fourier Transformer) 123, a parallel-to-serial converter (PSC) 125, a guard interval inserter 127, a digital-to-analog converter (DAC) 129, and an RF (Radio Frequency) processor 131.

Upon generation of user data bits or control data bits to be transmitted, they are provided to the CRC inserter 111. The user data bits or control data bits are called information data bits. The CRC inserter 111 inserts CRC bits into the information data bits and the encoder 113 encodes the information data bits received from the CRC inserter 111 in a predetermined coding method such as convolutional coding or turbo coding having a predetermined coding rate.

The symbol mapper 115 maps the coded bits to modulation symbols in a predetermined modulation method such as BPSK (Binary Phase Shift Keying), QPSK (Quadrature Phase Shift Keying), or 16QAM (16-ary Quadrature Amplitude Modulation). The sub-carrier allocator 117 assigns sub-carriers to the modulated symbols according to the present invention. The SPC 119 converts a serial modulation symbol sequence received from the sub-carrier allocator 117 into parallel symbols. The pilot symbol inserter 121 inserts pilot symbols in the parallel modulation symbols.

The IFFT 123 performs an N-point inverse fast Fourier transformation on the signal received from the pilot symbol inserter 121. The PSC 125 serializes the IFFT symbols, and the guard interval inserter 127 inserts a guard interval in the serial symbols. The guard interval eliminates interference between an OFDM symbol transmitted in a previous OFDM symbol time and a current OFDM symbol to be transmitted in a current OFDM symbol time. The guard interval is a cyclic prefix or a cyclic postfix. The cyclic prefix is created by copying a predetermined number of last samples of an OFDM symbol in the time domain and inserting them in an effective OFDM symbol, while the cyclic postfix is created by copying a predetermined number of first samples of an OFDM symbol in the time domain and inserting them in an effective OFDM symbol.

The DAC 129 converts the digital signal received from the guard interval inserter 127 to an analog signal. The RF processor 131, including a filter and a front end unit, processes the analog signal so that it can be transmitted in the air. The RF signal is transmitted in the air through a transmit antenna.

As described before, some of the entire sub-carriers can be used by an MS and others can not, according to channel conditions. The parameters that determine the channel characteristics of an OFDMA mobile communication system are the velocity of an MS, delay spread, and uplink timing error. Therefore, the present invention provides methods of assigning sub-carriers, taking into account the Doppler spread determined by the mobile velocity, the delay spread, and the uplink timing error. In an embodiment of the present invention, sub-carriers are assigned in the frequency domain according to the mobile velocity. In another embodiment of the present invention, sub-carriers are assigned in the time domain according to the mobile velocity. In a third embodiment of the present invention, sub-carriers are assigned in the frequency domain according to the delay spread. In a fourth embodiment of the present invention, sub-carriers are assigned in the time domain according to the delay spread. In a fifth embodiment of the present invention, sub-carriers are assigned in the frequency domain according to the uplink timing. In a sixth embodiment of the present invention, sub-carriers are assigned in the time domain according to the uplink timing.

In the present invention, sub-carriers are assigned to each MS at predetermined intervals, for example, M=2^{m} (m=0, 1, 2, 3, . . .). The operation of assigning sub-carriers with the sub-carrier spacing and the reason for setting the sub-carrier spacing will be described later.

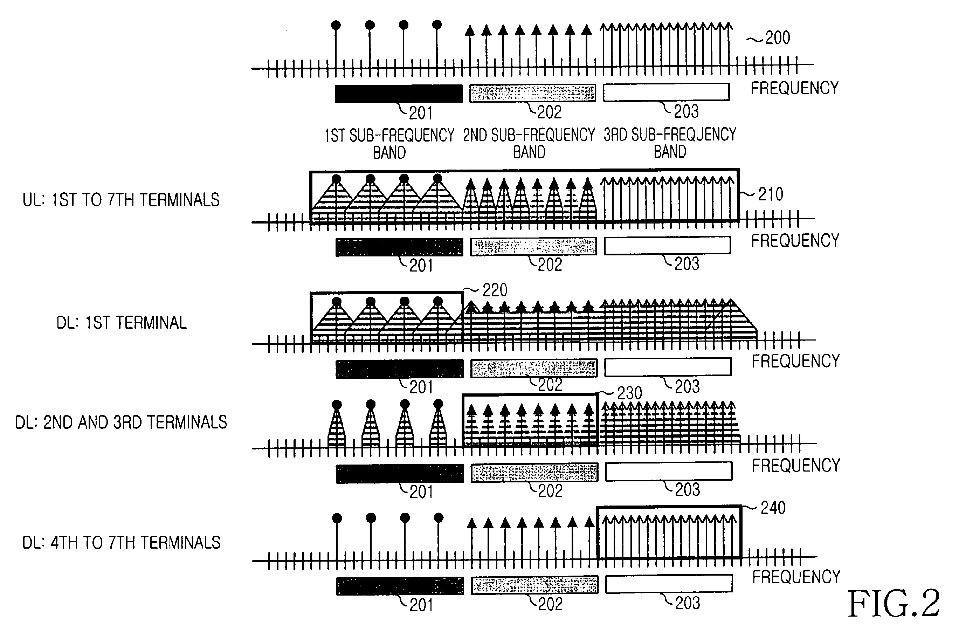

FIG. 2 illustrates an operation for assigning sub-carriers in the frequency domain according to mobile velocity according to an embodiment of the present invention.

In accordance with the embodiment of the present invention, the total frequency band of the OFDMA mobile communication system is divided into a predetermined number of, for example, three sub-frequency bands according to the mobile velocity. The mobile velocity is classified into high speed, medium speed, and low speed and the three sub-frequency bands are mapped to the three mobile velocities. Referring to FIG. 2, the total frequency band 200 is divided into a first sub-frequency band 201, a second sub-frequency band 202, and a third sub-frequency band 203. Sub-carriers in the first sub-frequency band 201 are assigned to MSs at a high speed, sub-carriers in the second sub-frequency band 202 are assigned to MSs at a medium speed, and sub-carriers in the third sub-frequency band 203 are assigned to MSs at a low speed.

The sub-carrier spacing is set to 2² (=4) for the high-speed MSs, 2¹ (=2) for the medium-speed MSs, and 2° (=1) for the low-speed MSs. The different sub-carrier spacing for each sub-frequency band will now be described below.

As described before, the mobile velocity is closely related to the Doppler spread. The Doppler spread increases with the mobile velocity and vice versa. Accordingly, sub-carriers in the first sub-frequency band 201 are assigned to the high-speed MSs with a relatively wide spacing of 4 in order to prevent interference between sub-carriers. Similarly, sub-carriers in the second sub-frequency band 202 are assigned to the medium-speed MSs with a relatively medium spacing of 2 in order to prevent interference between sub-carriers. Sub-carriers in the third sub-frequency band 203 are assigned to the low-speed MSs with a relatively narrow spacing of 1. The sub-carrier spacing is widest in the first sub-frequency band 201 so as to minimize the Doppler effects caused by the high-speed movement.

Assignment of uplink sub-carriers and downlink sub-carriers according to the embodiment of the present invention will be described with reference to FIG. 2.

On the assumption that the BS services a first to a seventh MS in the OFDMA mobile communication system, the BS detects the velocities of the MSs using feedback information or sub-carrier signals received from the MSs. The detection of the mobile velocity is beyond the scope of the present invention and thus its description is not provided here. The BS assigns sub-carriers in the first sub-frequency band 201 with a spacing of 4 as uplink sub-carriers for high-speed MSs, sub-carriers in the second sub-frequency band 202 with a spacing of 2 as uplink sub-carriers for medium-speed MSs, and sub-carriers in the third sub-frequency band 203 with a spacing of 1, that is, successive sub-carriers as uplink sub-carriers for low-speed MSs, as indicated by reference numeral 210. The BS transmits uplink sub-carrier assignment information to the seven MSs and then the MSs transmit the sub-carrier signals correspondingly. The transmission of the uplink sub-carrier assignment information is not related directly to the present invention, and will not be detailed herein.

In the same manner as the uplink sub-carrier assignment, the BS assigns the sub-carriers in the first sub-frequency band 201 with a spacing of 4 as the downlink the sub-carriers for the high-speed MSs as indicated by reference numeral 220, sub-carriers in the second sub-frequency band 202 with a spacing of 2 as the downlink sub-carriers for the medium-speed MSs as indicated by reference numeral 230, and the sub-carriers in the third sub-frequency band 203 with a spacing of 1, that is, successive sub-carriers, as the downlink sub-carriers for the low-speed MSs as indicated by reference numeral 240. The BS transmits the downlink sub-carrier assignment information to the seven MSs and then the MSs receive the sub-carrier signals correspondingly. Transmission of the downlink sub-carrier assignment information is not related directly to the present invention, and will not be detailed herein.

In the illustrated case of FIG. 2, the sub-carriers in the first sub-frequency band 201 are assigned as the uplink and the downlink sub-carriers to the first MS, the sub-carriers in the second sub-frequency band 202 to the second and third MSs, and the sub-carriers in the third sub-frequency band 203 to the fourth to seventh MSs. By setting a relatively wide sub-carrier spacing for the high-speed MSs, interference cause by the increase of the Doppler spread is eliminated. By setting a relatively narrow sub-carrier spacing for the low-speed MSs, resource efficiency is increased.

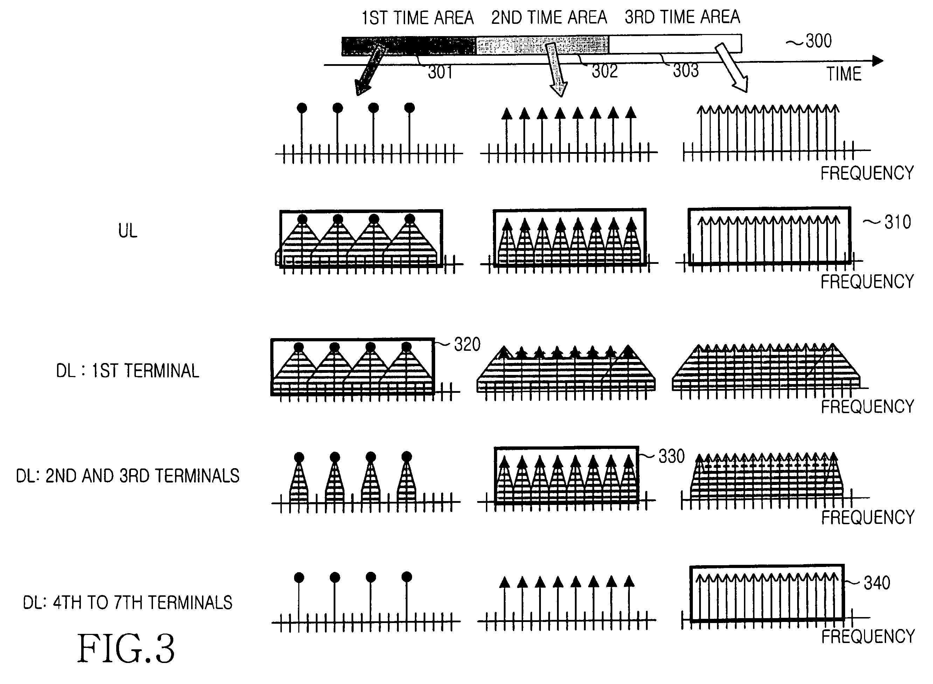

FIG. 3 is a diagram illustrating an operation for assigning sub-carriers in the time domain according to mobile velocity according to another embodiment of the present invention.

In accordance with the second embodiment of the present invention, the time domain of the OFDMA mobile communication system is divided into a predetermined number of, for example, three time areas according to the mobile velocity. The mobile velocity is classified .into a high speed, a medium speed, and a low speed, and the three time areas are mapped to the three mobile velocities. Referring to FIG. 3, the total time domain 300 is divided into a first time area 301, a second time area 302, and a third time area 303. The sub-carriers in the first time area 301 are assigned to the MSs at a high speed, the sub-carriers in the second time area 302 are assigned to the MSs at a medium speed, and the sub-carriers in the third time area 303 are assigned to MSs at a low speed.

The sub-carrier spacing is set to 2² (=4) for the high-speed MSs, 2¹ (=2) for the medium-speed MSs, and 2° (=1) for the low-speed MSs. The difference of the sub-carrier spacing for each time area will now be described below.

As described before, the mobile velocity is related closely to the Doppler spread. The Doppler spread increases with the mobile velocity and vice versa. Accordingly, the sub-carriers in the first sub-frequency band 301 are assigned to the high-speed MSs with a relatively wide spacing of 4 in order to prevent interference between sub-carriers. Similarly, the sub-carriers in the second sub-frequency band 302 are assigned to the medium-speed MSs with a relatively medium spacing of 2 in order to prevent interference between the sub-carriers. The sub-carriers in the third sub-frequency band 303 are assigned to the low-speed MSs with a relatively narrow spacing of 1. The sub-carrier spacing is the widest in the first sub-frequency band 301 so as to minimize the Doppler effects caused by the high-speed movement.

Assignment of the uplink sub-carriers and the downlink sub-carriers according to the second embodiment of the present invention will be described with reference to FIG. 3.

On the assumption that the BS services a first to a seventh MS in the OFDMA mobile communication system, the BS detects the velocities of the MSs using feedback information or sub-carrier signals received from the MSs. The detection of the mobile velocity is beyond the scope of the present invention and thus its description is not provided here. The BS assigns as the uplink sub-carriers for the high-speed MSs the sub-carriers in the first time area 301 with a spacing of 4, the sub-carriers in the second time area 302 with a spacing of 2 as the uplink sub-carriers for the medium-speed MSs, and the sub-carriers in the third time area 303 with a spacing of 1, that is, successive sub-carriers, as the uplink sub-carriers for low-speed MSs, as indicated by reference numeral 310. The BS transmits the uplink sub-carrier assignment information to the seven MSs and then the MSs transmit the sub-carrier signals correspondingly. The transmission of the uplink sub-carrier assignment information is not related directly to the present invention, and will not be detailed herein.

In the same manner as the uplink sub-carrier assignment, the BS assigns as the downlink sub-carriers for the high-speed MSs the sub-carriers in the first time area 301 with a spacing of 4 as indicated by reference numeral 320, the sub-carriers in the second time area 302 with a spacing of 2 as the downlink sub-carriers for the medium-speed MSs as indicated by reference numeral 330, and the sub-carriers in the third time area 303 with a spacing of 1, that is, successive sub-carriers, as the downlink sub-carriers for the low-speed MSs as indicated by reference numeral 340. The BS transmits the downlink sub-carrier assignment information to the seven MSs and then the MSs receive sub-carrier signals correspondingly. Transmission of the downlink sub-carrier assignment information is not related directly to the present invention, and will not be detailed herein.

In the illustrated case of FIG. 3, sub-carriers in the first time area 301 are assigned to the first MS as the uplink and the downlink sub-carriers, the sub-carriers in the second time area 302 to the second and third MSs, and the sub-carriers in the third time area 303 to the fourth to seventh MSs. By setting a relatively wide sub-carrier spacing for the high-speed MSs, interference cause by the increase of the Doppler spread is eliminated. By setting a relatively narrow sub-carrier spacing for the low-speed MSs, resource efficiency is increased.

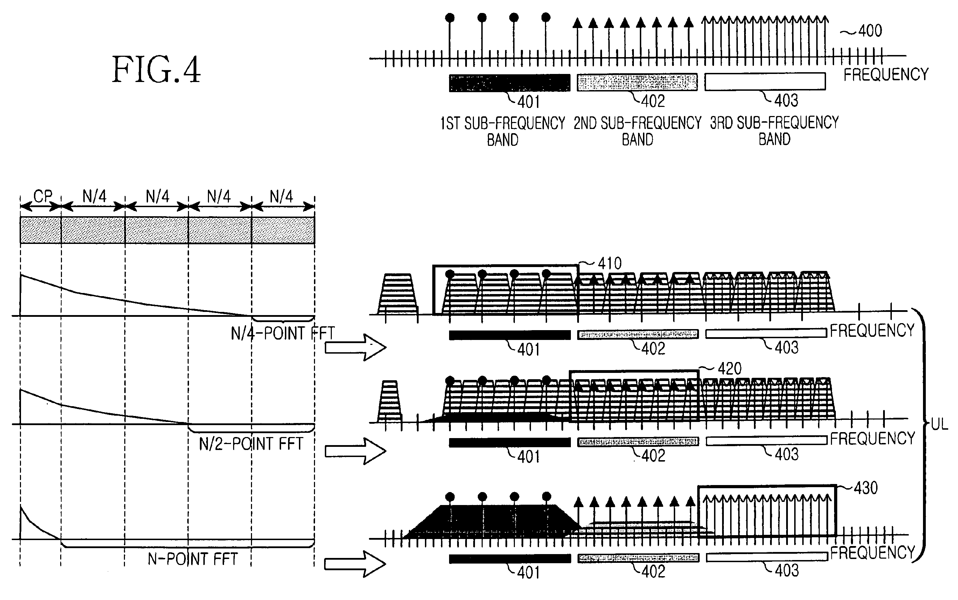

FIG. 4 illustrates an operation for assigning sub-carriers in the frequency domain according to the delay spreads of MSs according to a third embodiment of the present invention.

In accordance with the third embodiment of the present invention, the total frequency band of the OFDMA mobile communication system is divided into a predetermined number of, for example, three sub-frequency bands, according to the delay spread. The delay spread is classified into a longest, a medium, and a shortest, and the three sub-frequency bands are mapped to the three delay spreads. Referring to FIG. 4, the total frequency band 400 is divided into a first sub-frequency band 401, a second sub-frequency band 402, and a third sub-frequency band 403. The sub-carriers in the first sub-frequency band 401 are assigned to MSs having the longest delay spread, the sub-carriers in the second sub-frequency band 402 to MSs having the medium delay spread, and the sub-carriers in the third sub-frequency band 403 to MSs having the shortest delay spread.

After the assignment of the sub-carriers in the first sub-frequency band 401 to the MSs having the longest delay spread, an N/4-point FFT is applied to them. After the assignment of the sub-carriers in the second sub-frequency band 402 to the MSs having the medium delay spread, an N/2-point FFT is applied to them. After the assignment of the sub-carriers in the third sub-frequency band 403 to the MSs having the shortest delay spread, an N-point FFT is applied to them.

As described before, the delay spread is related to the channel environment. Typically, an MS, if it is located in an outdoor channel environment, experiences a longer delay spread. The delay spread is eventually related closely to a guard interval length in the OFDMA mobile communication system and the guard interval must be longer than the delay spread. However, as the guard interval length increases, the total transmission capacity of the OFDMA mobile communication system decreases. Increasing the guard interval length without limit, in consequence, degrades system efficiency.

In the present invention, therefore, the N/4-, N/2-, and N-point FFT are used respectively for the first, the second and the third sub-frequency bands 401, 402 and 403. The FFT point size is smallest for the first sub-frequency band 401 in order to avoid inter-symbol interference that might otherwise occur due to the delay spread. The application of the N/4- and N/2-point FFT to the first and second sub-frequency bands 401 and 402, in effect, increases the guard interval length by 3/4 and 1/2 of an OFDM symbol length, respectively.

Assignment of uplink sub-carriers according to the third embodiment of the present invention will be described with reference to FIG. 4.

The BS detects the delay spreads of the MSs that the BS services from the sub-carrier signals received from the MSs. The detection of the delay spreads is beyond the scope of the present invention and thus its description is not provided here. The BS to MSs having the longest delay spread the assigns sub-carriers in the first sub-frequency band 401 as the uplink sub-carriers, as indicated by reference numeral 410, the sub-carriers in the second sub-frequency band 402 as the uplink sub-carriers for MSs having the medium delay spread, as indicated by reference numeral 420, and the sub-carriers in the third sub-frequency band 403 as the uplink sub-carriers to MSs having the shortest delay spread, as indicated by reference numeral 430. Consequently, as the FFT point size decreases, the cyclic prefix length increases, thereby preventing the delay spread-caused errors. However, the increase of the cyclic prefix length lowers the data rate, as described before. Thus, in the case of a short delay spread, the data rate is increased by increasing the FFT point size. The guard interval is a cyclic prefix or a cyclic postfix. The cyclic prefix is created by copying a predetermined number of the last samples of an OFDM symbol in the time domain and inserting them in an effective OFDM symbol, while the cyclic postfix is created by copying a predetermined number of the first samples of an OFDM symbol in the time domain and inserting them in an effective OFDM symbol. The cyclic prefix is taken as the exemplary guard interval in the present invention.

The BS then transmits the uplink sub-carrier assignment information corresponding to the delay spreads to the MSs and the MSs transmit the sub-carrier signals correspondingly. Transmission of the uplink sub-carrier assignment information is not related directly to the present invention, and will not be detailed herein. By setting a relatively small FFT point size for the MSs having the longest delay spread, errors caused by the increase of the delay spread are prevented. By setting a relatively large FFT point size for the MSs having the shortest delay spread, the data rate is increased, thereby increasing the resource efficiency.

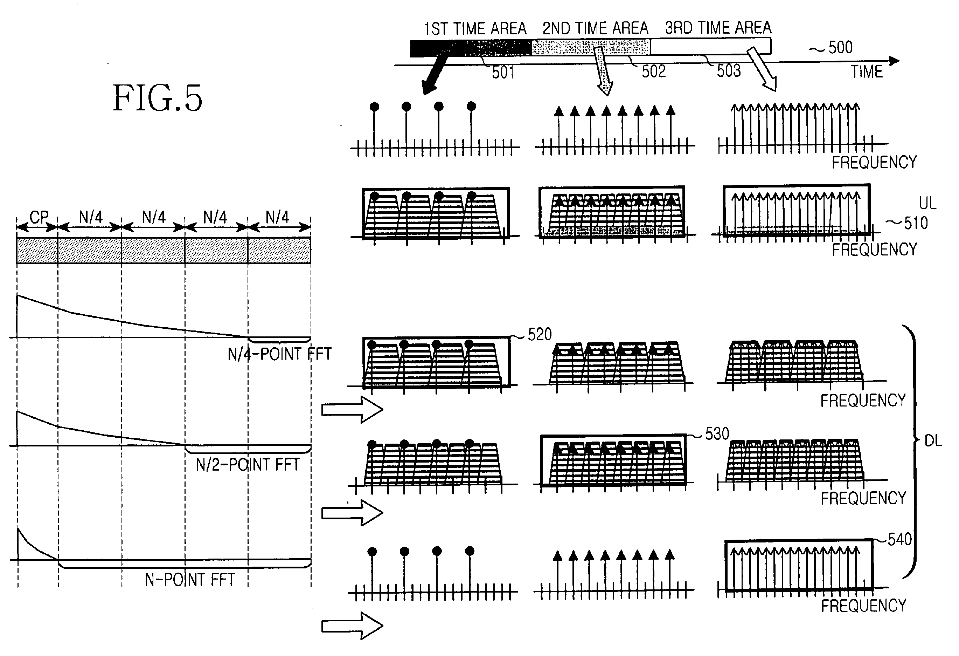

FIG. 5 illustrates an operation for assigning sub-carriers in the time domain according to the delay spreads of MSs according to a fourth embodiment of the present invention.

In accordance with the fourth embodiment of the present invention, the time domain of the OFDMA mobile communication system is divided into a predetermined number of, for example, three, time areas according to the delay spread. The delay spread is classified into a longest, a medium, and a shortest, and the three time areas are mapped to the three delay spreads. Referring to FIG. 5, a time domain 500 is divided into a first time area 501, a second time area 502, and a third time area 503. The sub-carriers in the first time area 501 are assigned to the MSs having the longest delay spread, the sub-carriers in the second time area 502 to the MSs having the medium delay spread, and the sub-carriers in the third time area 503 to the MSs having the shortest delay spread.

After the assignment to the MSs having the longest delay spread of the sub-carriers in the first time area 501, an N/4-point FFT is applied to them. After the assignment to the MSs having the medium delay spread of the sub-carriers in the second time area 502, an N/2-point FFT is applied to them. After the assignment to the MSs having the shortest delay spread of the sub-carriers in the third time area 503, an N-point FFT is applied to them. That is, the N/4-, N/2-, and N-point FFT are used respectively for the first, the second and the third time areas 501, 502 and 503. The FFT point size is the smallest for the first time area 501 in order to lengthen the guard interval and thus avoid inter-symbol interference that might otherwise occur due to the delay spread.

Assignment of the uplink sub-carriers and the downlink sub-carriers according to the fourth embodiment of the present invention will be described with reference to FIG. 5.

The BS detects the delay spreads of the MSs that it services from the sub-carrier signals received from the MSs. The detection of the delay spreads is beyond the scope of the present invention and thus its description is not provided here. The BS assigns the sub-carriers in the first time area 501 as the uplink sub-carriers to the MSs having the longest delay spread, the sub-carriers in the second time area 502 as the uplink sub-carriers for the MSs having the medium delay spread, and the sub-carriers in the third time area 503 as the uplink sub-carriers to the MSs having the shortest delay spread, as indicated by reference numeral 510. Consequently, as the FFT point size of a receiver decreases, the cyclic prefix length increases, thereby preventing the delay spread-caused errors. However, the increase of the cyclic prefix length lowers the data rate, as described before. In the case of a short delay spread, the data rate is increased by increasing the FFT point size. The BS then transmits the uplink sub-carrier assignment information corresponding to the delay spreads to the MSs and the MSs transmit the sub-carrier signals correspondingly. Transmission of the uplink sub-carrier assignment information is not related directly to the present invention, and will not be detailed herein.

In the same manner as the uplink sub-carrier assignment, the BS assigns the sub-carriers in the first time area 501 as the downlink sub-carriers to the MSs having the longest delay spread, as indicated by reference numeral 520, the sub-carriers in the second time area 502 as the downlink sub-carriers to the MSs having the medium delay spread, as indicated by reference numeral 530, and the sub-carriers in the third time area 503 as the downlink sub-carriers to the MSs having the shortest delay spread, as indicated by reference numeral 540. The BS transmits the downlink sub-carrier assignment information corresponding to the delay spreads to the MSs and then the MSs receive sub-carrier signals correspondingly. Transmission of the downlink sub-carrier assignment information is not related directly to the present invention, and will not be detailed herein. By setting a relatively small FFT point size for the MSs having the longest delay spread, errors caused by the increase of the delay spread are prevented. By setting a relatively large FFT point size for the MSs having the shortest delay spread, the data rate is increased, thereby increasing the resource efficiency.

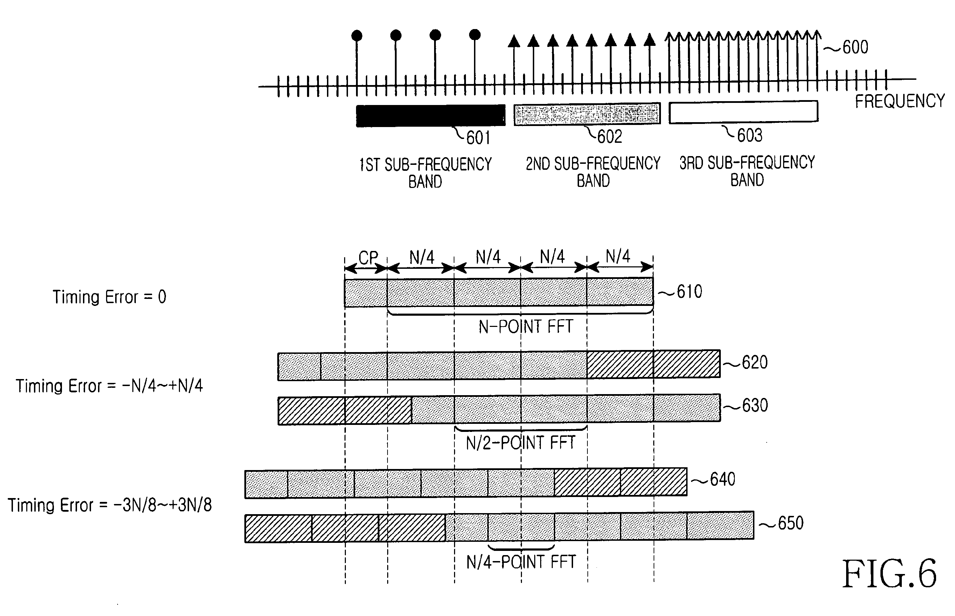

FIG. 6 illustrates an operation for assigning sub-carriers in the frequency domain according to the terminal timing error, that is, the uplink timing error, according to a fifth embodiment of the present invention.

In accordance with the fifth embodiment of the present invention, the total frequency band of the OFDMA mobile communication system is divided into a predetermined number of, for example three, sub-frequency bands according to the uplink timing error. The uplink timing error is classified into a longest, a medium, and a shortest, and the three sub-frequency bands are mapped to the three uplink timing errors. Referring to FIG. 6, the total frequency band 600 is divided into a first sub-frequency band 601, a second sub-frequency band 602, and a third sub-frequency band 603. The sub-carriers in the first sub-frequency band 601 are assigned to the MSs having the longest timing error, the sub-carriers in the second sub-frequency band 602 to the MSs having the medium timing error, and the sub-carriers in the third sub-frequency band 603 to the MSs having the shortest timing error.

After the assignment of the sub-carriers in the first sub-frequency band 601 to the MSs having the longest timing error, an N/4-point FFT is applied to them. After the assignment of the sub-carriers in the second sub-frequency band 602 to the MSs having the medium timing error, an N/2-point FFT is applied to them. After the assignment of the sub-carriers in the third sub-frequency band 603 to the MSs having the shortest timing error, an N-point FFT is applied to them. That is, the N/4-, N/2-, and N-point FFT are used respectively for the first, the second and the third sub-frequency bands 601, 602 and 603. The FFT point size is the smallest for the first sub-frequency band 601 in order to avoid inter-symbol interference that might otherwise occur due to timing error.

The timing error is, in consequence, related closely to the mobile velocity. As the mobile velocity decreases, the timing error is shortened. On the contrary, if the mobile velocity increased, the timing error is lengthened. As illustrated in FIG. 6, when a timing error of the shortest length occurs, for example, if no timing error occurs (TIMING ERROR=0) as indicated by reference numeral 610, the N-point FFT is used. If a timing error of the medium length, for example if the timing error is between -N/4 and +N/4 (TIMING ERROR=-N/4 ~+N/4) as indicated by reference numerals 620 and 630, the N/2-point FFT is used. If a timing error of the longest length, for example if the timing error is between -3N/8 and +3N/8 (TIMING ERROR=-3N/8 ~+3N/8) as indicated by reference numerals 640 and 650, the N/4-point FFT is used.

The assignment of the uplink sub-carriers according to the fifth embodiment of the present invention will be described with reference to FIG. 6.

The BS detects the timing errors of the MSs that it services from the sub-carrier signals received from the MSs. The detection of the timing errors is beyond the scope of the present invention and thus its description is not provided here. The BS assigns the sub-carriers in the first sub-frequency band 601 as the uplink sub-carriers to the MSs having the longest timing error, the sub-carriers in the second sub-frequency band 602 as the uplink sub-carriers for the MSs having the medium timing error, and the sub-carriers in the third sub-frequency band 603 as the uplink sub-carriers to the MSs having the shortest timing error. Consequently, as the FFT point size decreases, the cyclic prefix length increases, thereby preventing timing error-caused errors. However, the increase of the cyclic prefix length lowers the data rate, as described before. In the case of a short timing error, the data rate is increased by increasing the FFT point size. The BS then transmits the uplink sub-carrier assignment information corresponding to the timing errors to the MSs and the MSs transmit the sub-carrier signals correspondingly. The transmission of the uplink sub-carrier assignment information is not related directly to the present invention, and will not be detailed herein. By setting a relatively small FFT point size for the MSs having the longest timing error, errors caused by the increase of the timing error are prevented. On the contrary, by setting a relatively large FFT point size for the MSs having the shortest timing error, the data rate is increased, thereby increasing the resource efficiency.

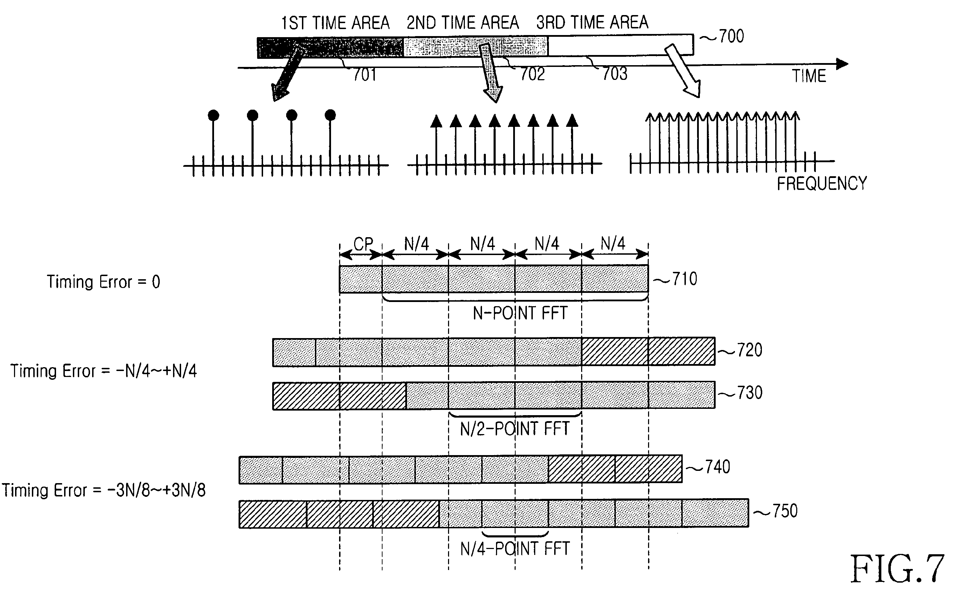

FIG. 7 illustrates an operation for assigning the sub-carriers in the time domain according to uplink timing error according to a sixth embodiment of the present invention.

In accordance with the sixth embodiment of the present invention, the time domain of the OFDMA mobile communication system is divided into a predetermined number of, for example three, time areas according to the uplink timing error. The uplink timing error is classified into a longest, a medium, and a shortest, and the three time areas are mapped to the three uplink timing errors. Referring to FIG. 7, a time domain 700 is divided into a first time area 701, a second time area 702, and a third time area 703. The sub-carriers in the first time area 701 are assigned to the MSs having the longest timing error, the sub-carriers in the second time area 702 to the MSs having the medium timing error, and the sub-carriers in the third time area 703 to the MSs having the shortest timing error.

After the assignment of the sub-carriers in the first time area 701 to the MSs having the longest timing error, an N/4-point FFT is applied to them. After the assignment of the sub-carriers in the second time area 702 to the MSs having the medium timing error, an N/2-point FFT is applied to them. After the assignment of the sub-carriers in the third time area 703 to the MSs having the shortest timing error, an N-point FFT is applied to them. That is, the N/4-, N/2-, and N-point FFT are used respectively for the first, the second and the third time areas 701, 702 and 703. The FFT point size is the largest in the first time area 701 because the guard interval length differs in the first, the second and the third time areas 701, 702 and 703 due to the timing errors.

As illustrated in FIG. 7, when a timing error of the shortest length occurs, for example, if no timing error occurs (TIMING ERROR=0) as indicated by reference numeral 710, the N-point FFT is used. If a timing error of the medium length, for example if the timing error is between -N/4 and +N/₄ (TIMING ERROR=-N/4 ~+N/4) as indicated by reference numerals 720 and 730, the N/2-point FFT is used. If a timing error of the longest length, for example if the timing error is between -3N/8 and +3N/8 (TIMING ERROR=-3N/8 ~+3N/8) as indicated by reference numerals 740 and 750, the N/4-point FFT is used.

Assignment of the uplink sub-carriers according to the sixth embodiment of the present invention will be described with reference to FIG. 7.

The BS detects the timing errors of MSs that it services from the sub-carrier signals received from the MSs. The detection of the timing errors is beyond the scope of the present invention and thus its description is not provided here. The BS assigns the sub-carriers in the first time area 701 as the uplink sub-carriers to the MSs having the longest timing error, the sub-carriers in the second time area 702 as the uplink sub-carriers for the MSs having the medium timing error, and the sub-carriers in the third time area 703 as the uplink sub-carriers to the MSs having the shortest timing error. Consequently, as the FFT point size decreases, the cyclic prefix length increases, thereby preventing timing error-caused errors. However, the increase of the cyclic prefix length lowers the data rate, as described before. Thus, in the case of a short timing error, the data rate is increased by increasing the FFT point size. The BS then transmits the uplink sub-carrier assignment information corresponding to the timing errors to the MSs and the MSs transmit sub-carrier signals correspondingly. The transmission of the uplink sub-carrier assignment information is not related directly to the present invention, and will not be detailed herein. By setting a relatively small FFT point size for the MSs having the longest timing error, the errors caused by the increase of timing error are prevented. On the contrary, by setting a relatively large FFT point size for the MSs having the shortest timing error, the data rate is increased, thereby increasing the resource efficiency.

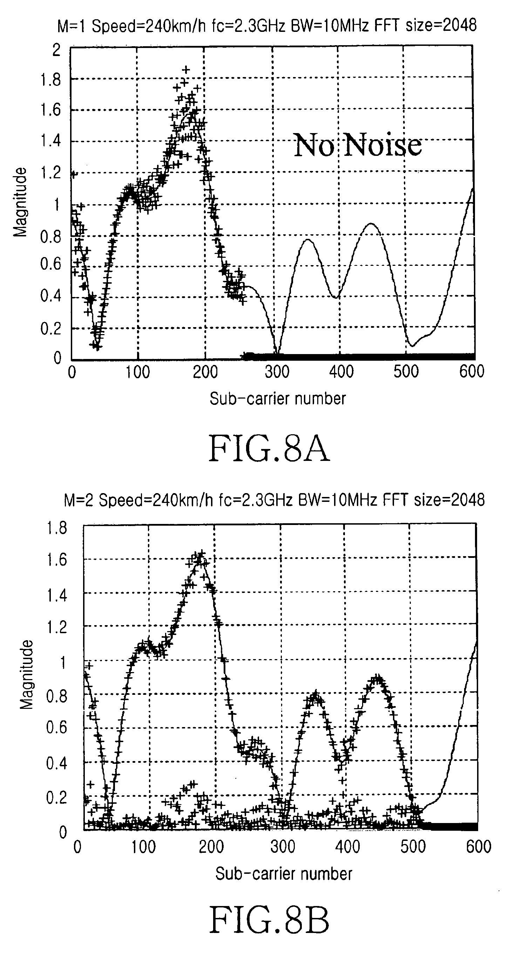

FIGs. 8A to 8D illustrate magnitude curves of received signals according to the embodiments of the present invention.

The magnitude curves are drawn under the conditions that mobile velocity is 240km/h (speed=240km/h), a central frequency is 2.3GHz (f_{c}=2.3GHz), a bandwidth is 10MHz (BW=10MHz), and an FFT point size is 2048 points (FFT size=2048).

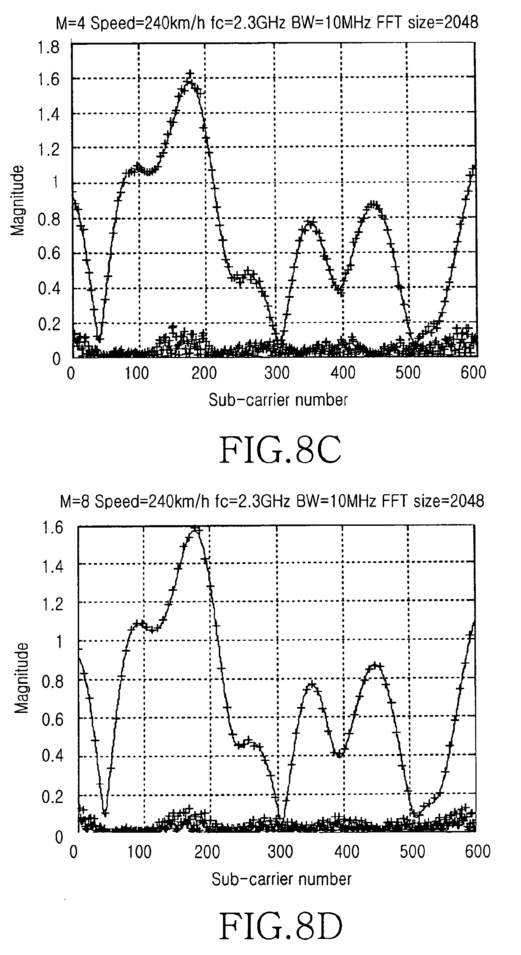

FIG. 8A illustrates a magnitude curve when 256 sub-carriers are transmitted with a spacing of 1 (M=1), FIG. 8B illustrates a magnitude curve when 256 sub-carriers are transmitted with a spacing of 2 (M=2), FIG. 8C illustrates a magnitude curve when 256 sub-carriers are transmitted with a spacing of 4 (M=4), and FIG. 8D illustrates a magnitude curve when 256 sub-carriers are transmitted with a spacing of 8 (M=8). As noted from FIGs. 8A to 8D, as the sub-carrier spacing is wider under the same environment, the performance is improved. As described earlier, the performance is improved as the sub-carrier spacing is wider due to the Doppler spread in a high-speed mobil environment.

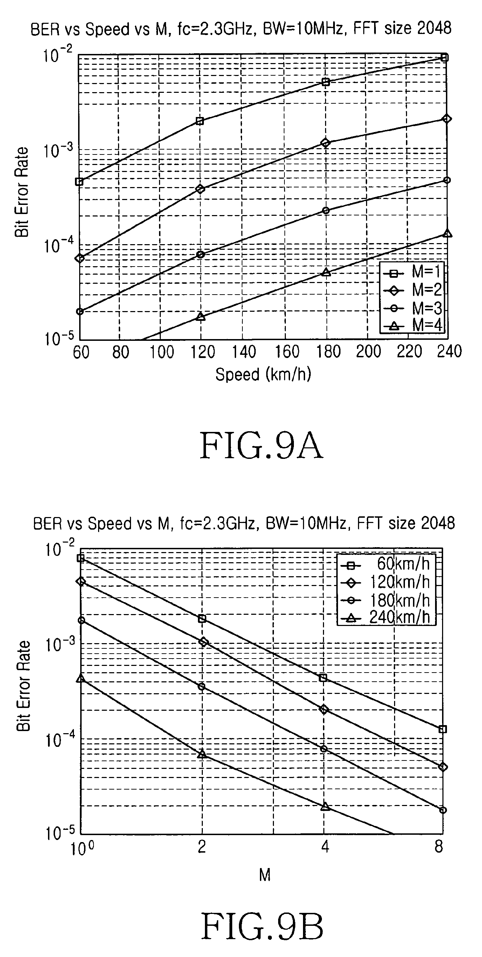

FIGs. 9A and 9B illustrate BER curves according to the embodiments of the present invention.

The BER curves are drawn under the conditions that a central frequency is 2.3GHz (f_{c}=2.3GHz), a bandwidth is 10MHz (BW=10MHz), and an FFT point size is 2048 points (FFT size=2048).

FIG. 9A illustrates the BER curves according to the sub-carrier spacings under the above conditions. As the sub-carriers are spaced by a wider gap, the BER performance is improved.

FIG. 9B illustrates the BER curves according to the mobile velocities and the sub-carrier spacings under the above conditions. As the sub-carriers are spaced by a wider gap, the BER performance is improved.

In accordance with the present invention as described above, the sub-carriers are assigned by taking into account the channel conditions involving the mobile velocity, the delay spread and the timing error. As result, the entire system efficiency is increased. The dynamic sub-carrier assignment for each MS according to its channel conditions maximizes the resource efficiency and optimizes a multi-user environment that accommodates multiple terminals.

While the invention has been shown and described with reference to certain preferred embodiments thereof, it will be understood by those skilled in the art that various changes in form and details may be made therein without departing from the scope of the invention as defined by the appended claims.

## Claims

1. A method of assigning sub-carriers to MSs in a BS in an orthogonal frequency division multiple access mobile communication system in which a total frequency band is divided into a plurality of sub-carrier bands, for signal transmission, comprising the steps of:
dividing the total frequency band into a predetermined number of sub-frequency bands;
detecting the channel condition of each of the MSs and determining a sub-frequency band for each MS according to the channel condition from among the predetermined number of sub-frequency bands; and
assigning sub-carriers in the determined sub-frequency band at a predetermined sub-carrier spacing to each MS.

2. The method of claim 1, wherein the channel condition is a mobile velocity.

3. The method of claim 2, wherein said predetermined number of sub-frequency bands is 3 and the total frequency band is divided into a first, a second and a third sub-carrier frequency band and wherein the sub-frequency band determining step comprises the steps of:
selecting the first sub-carrier frequency band for high-speed MSs;
selecting the second sub-carrier frequency band for medium-speed MSs; and
selecting the third sub-carrier frequency band for low-speed MSs.

4. The method of claim 3, wherein the sub-carrier assigning step comprises the steps of:
assigning to the high-speed MSs sub-carriers in the first sub-frequency band at a predetermined spacing of K;
assigning to the medium-speed MSs sub-carriers in the second sub-frequency band at a predetermined spacing of P; and
assigning to the low-speed MSs sub-carriers in the third sub-frequency band at a predetermined spacing of Q.

5. The method of claim 4, wherein K is greater than P and Q, and P is greater than Q.

6. The method of claim 1, wherein the channel condition is a delay spread.

7. The method of claim 6, wherein said predetermined number of sub-frequency bands is 3 and the total frequency band is divided into a first, a second and a third sub-carrier frequency band and wherein the sub-frequency band determining step comprises the steps of:
selecting the first sub-carrier frequency band for MSs having a maximum delay spread;
selecting the second sub-carrier frequency band for MSs having a medium delay spread; and
selecting the third sub-carrier frequency band for MSs having a minimum delay spread.

8. The method of claim 7, wherein the sub-carrier assigning step comprises the steps of:
assigning to the MSs having the maximum delay spread sub-carriers in the first sub-frequency band such that a predetermined K-point fast Fourier transform is applied;
assigning to the MSs having the medium delay spread sub-carriers in the second sub-frequency band such that a predetermined P-point fast Fourier transform is applied; and
assigning to the MSs having the minimum delay spread sub-carriers in the third sub-frequency band such that a predetermined Q-point fast Fourier transform is applied.

9. The method of claim 8, wherein K is less than P and Q, and P is less than Q.

10. The method of claim 1, wherein the channel condition is a timing error.

11. The method of claim 10, wherein said predetermined number of sub-frequency bands is 3 and the total frequency band is divided into a first, a second and a third sub-carrier frequency band and wherein the sub-frequency band determining step comprises the steps of:
selecting the first sub-carrier frequency band for MSs having a maximum timing error;
selecting the second sub-carrier frequency band for MSs having a medium timing error; and
selecting the third sub-carrier frequency band for MSs having a minimum timing error.

12. The method of claim 11, wherein the sub-carrier assigning step comprises the steps of:
assigning to the MSs having the maximum timing error sub-carriers in the first sub-frequency band such that a predetermined K-point fast Fourier transform is applied;
assigning to the MSs having the medium timing error sub-carriers in the second sub-frequency band such that a predetermined P-point fast Fourier transform is applied; and
assigning to the MSs having the minimum timing error sub-carriers in the third sub-frequency band such that a predetermined Q-point fast Fourier transform is applied.

13. The method of claim 12, wherein K is less than P and Q, and P is less than Q.

14. A method of assigning sub-carriers to MSs in a BS in an orthogonal frequency division multiple access mobile communication system in which a total frequency band is divided into a plurality of sub-carrier bands, for signal transmission, comprising the steps of:
dividing a predetermined time domain into a predetermined number of time areas;
detecting the channel condition of each of the MSs and determining a time area for the MS according to each channel condition from among the predetermined number of time areas; and
assigning sub-carriers in the determined time area at a predetermined spacing to each MS.

15. The method of claim 14, wherein the channel condition is a mobile velocity.

16. The method of claim 15, wherein said predetermined number of time areas is 3 and the time domain is divided into a first, a second and a third time area and wherein the time area determining step comprises the steps of:
selecting the first time area for high-speed MSs, if;
selecting the second time area for medium-speed MSs; and
selecting the third time area for low-speed MSs.

17. The method of claim 16, wherein the sub-carrier assigning step comprises the steps of:
assigning to the high-speed MSs sub-carriers in the first time area at a predetermined spacing of K;
assigning to the medium-speed MSs sub-carriers in the second time area at a predetermined spacing of P; and
assigning to the low-speed MSs sub-carriers in the third time area at a predetermined spacing of Q.

18. The method of claim 17, wherein K is greater than P and Q, and P is greater than Q.

19. The method of claim 14, wherein the channel condition is a delay spread.

20. The method of claim 19, wherein said predetermined number of time areas is 3 and the time domain is divided into a first, a second and a third time area and wherein the time area determining step comprises the steps of:
selecting the first time area for MSs having a maximum delay spread, if ;
selecting the second time area for MSs having a medium delay spread; and
selecting the third time area for MSs having a minimum delay spread.

21. The method of claim 20, wherein the sub-carrier assigning step comprises the steps of:
assigning to the MSs having the maximum delay spread sub-carriers in the first time area such that a predetermined K-point fast Fourier transform is applied;
assigning to the MSs having the medium delay spread sub-carriers in the second time area such that a predetermined P-point fast Fourier transform is applied; and
assigning to the MSs having the minimum delay spread sub-carriers in the third time area such that a predetermined Q-point fast Fourier transform is applied.

22. The method of claim 21, wherein K is less than P and Q, and P is less than Q.

23. The method of claim 14, wherein the channel condition is a timing error.

24. The method of claim 23, wherein said predetermined number of time areas is 3 and the time domain is divided into a first, a second and a third time area and wherein the time area determining step comprises the steps of:
selecting the first time area for MSs having a maximum timing error, if s;
selecting the second time area for MSs having a medium timing error; and
selecting the third time area for MSs having a minimum timing error.

25. The method of claim 24, wherein the sub-carrier assigning step comprises the steps of:
assigning to the MSs having the maximum timing error sub-carriers in the first time area such that a predetermined K-point fast Fourier transform is applied;
assigning to the MSs having the medium timing error sub-carriers in the second time area such that a predetermined P-point fast Fourier transform is applied; and
assigning to the MSs having the minimum timing error sub-carriers in the third time area such that a predetermined Q-point fast Fourier transform is applied.

26. The method of claim 25, wherein K is less than P and Q, and P is less than Q.
